# FASCICULE DE BREVET EUROPEEN

(11) **EP 4 058 312 B1**
(45) Date de publication et mention de la délivrance du brevet: **01.11.2023**
(21) Numéro de dépôt: 20816293.3
(22) Date de dépôt: 10.11.2020
(51) Int. Cl.: B60H 1/00

(54) **DISPOSITIF DE CHAUFFAGE, VENTILATION ET/OU CLIMATISATION POUR VEHICULE AUTOMOBILE**
HEIZUNGS-, LÜFTUNGS- UND/ODER KLIMATISIERUNGSVORRICHTUNG FÜR EIN KRAFTFAHRZEUG
HEATING, VENTILATION AND/OR AIR-CONDITIONING DEVICE FOR A MOTOR VEHICLE

(30) Priorité: 15.11.2019 FR 1912764
(43) Date de publication de la demande: 21.09.2022
(73) Titulaire: VALEO SYSTEMES THERMIQUES, 78320 Le Mesnil Saint-Denis (FR)
(72) Inventeur: GOUDE, Sébastien, 78320 Le Mesnil Saint-Denis (FR)
(74) Mandataire: Valeo Systèmes Thermiques
(86) Numéro de dépôt international: PCT/FR2020/052049
(87) Numéro de publication internationale: WO 2021/094680

(56) Documents cités:
- WO-A1-2018/202973
- JP-U- S6 046 412
- JP-U- S60 142 111
- US-A1- 2005 075 063

## Description

L'invention concerne le domaine des dispositifs de chauffage, ventilation et/ou climatisation pour véhicule automobile ainsi qu'un véhicule automobile comprenant un tel dispositif.

Les dispositifs de chauffage, ventilation et/ou climatisation comme celui du document US 2005/075063 A1 sont soumis à des exigences strictes en termes de nuisances sonores. En effet, ces dispositifs comprennent un groupe moto-ventilateur (aussi connu sous le nom pulseur) avec une roue à pales mis en rotation par un moteur afin de générer un flux d'air. Le groupe moto-ventilateur génère des nuisances sonores, notamment lorsque la ventilation est mise en puissance maximale, et le bruit traverse le boitier d'entrée d'air et pénètre au sein de l'habitacle en passant par l'entrée d'air reliée à l'habitacle, aussi appelé l'entrée d'air de recyclage. Il en résulte qu'un conducteur ou passager en mettant la ventilation en puissance maximale et en mode recyclage peut entendre le groupe moto-ventilateur fonctionner ce qui peut cause des désagréments et un inconfort auditif.

L'invention a notamment pour but de surmonter un tel inconvénient.

Pour cela, l'invention propose un dispositif de chauffage, ventilation et/ou climatisation pour véhicule automobile comprenant un boitier d'entrée d'air et un boitier en spirale agencé en sortie du boitier d'entrée d'air par rapport à l'écoulement d'un flux d'air, chaque boitier comprenant une pluralité de parois définissant un volume intérieur et une volute, ledit boitier d'entrée d'air comprenant en outre :
a. au moins une premier entrée d'air pour l'introduction d'un premier flux d'air,
b. au moins une deuxième entrée d'air pour l'introduction d'un second flux d'air 11
   caractérisé en que,
c. ledit boitier d'entrée d'air comprend un premier conduit interne en matériau poreux s'étendant au sein du volume et agencé de manière à relier la première entrée d'air à l'entrée du boitier en spirale.

De cette manière, les nuisances sonores générées par le groupe moto-ventilateur restent cantonnées au sein du boitier d'entrée d'air. En effet, un conduit interne réalisé en matériau poreux présente des propriété d'absorption de sons et le bruit se retrouvé piégé.

Un aspect selon l'invention propose que le deuxième flux d'air s'écoule depuis la deuxième entrée d'air jusqu'à l'entrée du boitier en spirale entre les parois du boitier d'entrée d'air et la surface externe du premier conduit interne.

Un autre aspect selon l'invention propose qu'un deuxième conduit interne en matériau poreux s'étend depuis la deuxième entrée d'air jusqu'à l'entrée du boitier en spirale.

Un autre aspect selon l'invention propose que les premier et deuxième conduits internes s'étendent chacun depuis leur entrée d'air respective jusqu'à un point de jonction où les deux conduits internes sont raccordés de manière à ne former qu'un seul conduit s'étendant depuis le point de jonction jusqu'à l'entrée du boitier en spirale.

Un autre aspect selon l'invention propose que le matériau poreux correspond à une mousse en polyuréthane.

Un autre aspect selon l'invention propose que le premier conduit interne présente un degré de porosité différent du deuxième conduit interne.

Un autre aspect selon l'invention propose que la section de passage d'air du premier conduit interne et/ou deuxième conduit interne augmente au fur et à mesure en direction de l'entrée du boitier en spirale.

Un autre aspect selon l'invention propose que la section de passage d'air du premier conduit interne et/ou deuxième conduit interne évolue d'une forme elliptique à une forme en cercle au fur et à mesure en direction de l'entrée du boitier en spirale.

Un autre aspect selon l'invention propose que le dispositif comprend en outre un boitier de distribution agencé en aval du conduit en spirale, par rapport à l'écoulement d'un flux d'air, le dit boitier de distribution comprenant au moins un échangeur de chaleur et au moins une sortie d'air pour distribuer le flux d'air en direction d'un habitacle de véhicule automobile.

L'invention concerne également un véhicule automobile comprenant un dispositif de chauffage, ventilation et/ou climatisation tel que décrit précédemment.

D'autres caractéristiques et avantages de l'invention ressortiront à la lecture de la description qui suit, en référence aux figures annexées, qui illustrent :
La [Fig. 1] illustre une vue en perspective du dispositif de chauffage, ventilation et/ou climatisation selon l'invention ;
La [Fig. 2] illustre une vue de profil d'une partie du dispositif de chauffage, ventilation et/ou climatisation selon l'invention ;
La [Fig. 3] illustre une vue en perspective d'une partie du dispositif de chauffage, ventilation et/ou climatisation.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

Les termes « amont » et « aval » sont toujours en référence par rapport à l'écoulement d'un flux d'air circulant au sein du dispositif de chauffage, ventilation et/ou climatisation

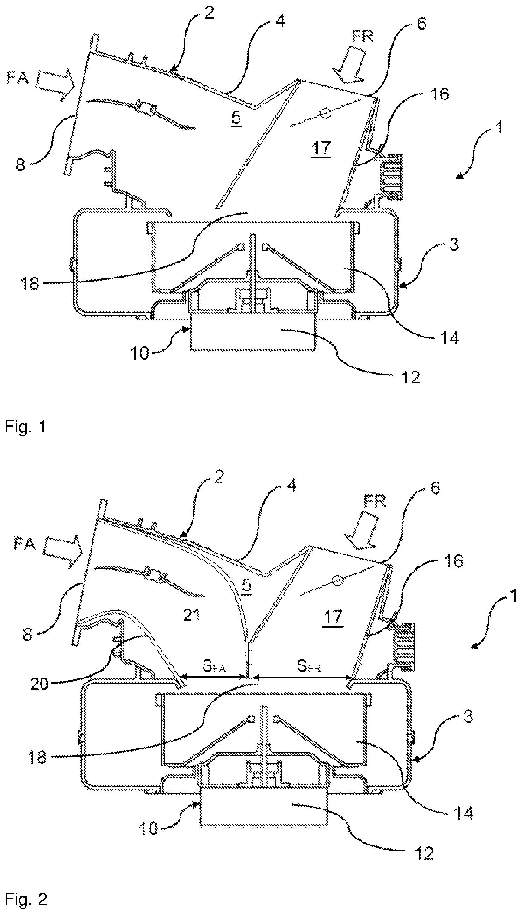

Le dispositif 1 de chauffage, ventilation et/ou climatisation selon l'invention et illustré en [Fig. 1] comprend un boitier d'entrée d'air 2 comprenant une pluralité de parois 4 définissant un volume intérieur 5 et un boitier en spirale 3 communément appelé volute également avec une pluralité de parois définissant un volume intérieur. Le dispositif 1, en particulier le boitier d'entrée d'air 2, comprend une première entrée d'air 6 pour permettre à un premier flux d'air FR de pénétrer au sein du boitier d'entrée d'air 2, c'est-à-dire au sein du volume intérieur 5. Le dispositif 1, en particulier le boitier d'entrée d'air 2, comprend en outre une deuxième entrée d'air 8 pour permettre à un deuxième flux d'air FA de pénétrer au sein du boitier d'entrée d'air 2, c'est-à-dire au sein du volume intérieur 5.

Selon l'invention, la première entrée d'air 6 est configurée pour permettre l'introduction d'un premier flux d'air FR, un flux d'air de recyclage FR, c'est-à-dire l'air issu du compartiment habitacle, pour cela le dispositif 1 peut comprendre un conduit agencé pour relier l'habitacle au dispositif 1 de chauffage, ventilation et/ou climatisation. Selon l'invention, la deuxième entrée d'air 8 est configurée pour permettre l'introduction d'un deuxième flux d'air, un flux d'air frais FA, c'est-à-dire l'air issu de l'extérieur du véhicule, pour cela le dispositif 1 peut comprendre un conduit agencé pour relier l'extérieur au dispositif 1 de chauffage, ventilation et/ou climatisation.

Chaque entrée d'air 6,8 peut comprendre un volet mobile entre une position d'obturation de l'entrée d'air et une position d'ouverture afin de permettre à chaque flux d'air FR, FA de pénétrer, ou non, au sein du volume intérieur 5 dans des proportions variables.

Le dispositif 1 de chauffage, ventilation et/ou climatisation comprend en outre un boitier en spirale 3. Le boitier en spirale 3, communément appelé volute, loge un groupe moto-ventilateur 10 constitué d'un moteur 12 et d'une roue à pale 14. Le moteur 12 met en rotation un arbre de transmission qui est lui-même relié à la roue à pale 14, par exemple au moyen d'un moyeu. La roue à pale 14 est alors entraînée en rotation générant ainsi un flux d'air où le(s) flux d'air est aspiré dans une direction axiale puis expulsé dans une direction radiale.

Le boitier en spirale 3 est agencé en aval du boitier d'entrée d'air 2 par rapport à l'écoulement d'un flux d'air si bien que le groupe moto-ventilateur 10 est agencé pour aspirer un flux d'air provenant de la première entrée d'air 6 et/ou de la deuxième entrée d'air 8 et de le(s) expulser vers un boitier distribution qui est décrit ci-dessous. Le boitier d'entrée d'air 2 et le boitier en spirale 3 sont reliés fluidiquement et comprennent des moyens de fixation pour être fixé l'un à l'autre.

Le dispositif 1 de chauffage, ventilation et/ou climatisation comprend en outre un boitier de distribution non illustré comprenant des moyens de traitements thermiques. Les moyens de traitement thermique comprennent un premier échangeur de chaleur, par exemple un évaporateur, destiné à refroidir et déshumidifier l'intégralité du flux d'air. Les moyens de traitement thermique comprennent également un deuxième échangeur de chaleur, par exemple un radiateur, destiné à réchauffer une partie du flux d'air circulant dans le dispositif 1 de chauffage, ventilation et/ou climatisation, et est agencé en aval, par rapport à l'écoulement du flux d'air, du premier échangeur de chaleur. Le deuxième échangeur de chaleur peut éventuellement être couplé à un radiateur électrique additionnel destiné à réchauffer le flux d'air de manière plus rapide, notamment lors du démarrage du véhicule.

Le groupe moto-ventilateur 10 génère des nuisances sonores, et le son peut passer à travers la première entrée d'air 6 et remonter jusqu'au compartiment habitacle. Il en résulte un désagrément pour les passagers du véhicule notamment lorsque la ventilation est mise au mode maximum.

Le dispositif 2 selon l'invention comprend un premier conduit interne 16 en matériau poreux qui s'étend au sein du volume intérieur 5 et agencé de manière à relier la première entrée d'air 6 à l'entrée 18 du boitier en spirale 3. Ainsi les nuisances sonores générées par le groupe moto ventilateur 10 sont absorbées par le matériaux poreux réduisant la quantité de bruit remontant par l'entrée d'air 6 de recyclage et améliorant ainsi le confort des passagers. En effet, le bruit ne peut pas passer par la première entrée d'air 6 sans traverser le premier conduit interne 16.

Le premier conduit interne 16 est réalisé en, ou est fait à partir d'un, matériaux poreux. Ce conduit interne correspondre à un tube cylindrique ou à un tube non cylindrique comme par exemple un cône creux tronqué. Le conduit interne peut être droit, ou rectiligne, comme sur la [Fig 1] ou présenter un coude comme sur la [Fig. 2] avec le conduit 20 qui sera décrit ultérieurement.

Le premier conduit interne 16 s'étend depuis la première entrée d'air 6 jusqu'à l'entrée 18 du boitier en spirale 3. Le premier conduit interne 16 définit un volume intérieur correspondant à un canal d'air 17 pour l'écoulement d'un flux d'air. Comme illustré sur la [Fig. 1], le premier flux d'air FR, c'est-à-dire le flux d'air de recyclage, pénètre au sein du boitier 2 par la première entrée d'air 6 directement au sein du canal d'air 17 définit par le premier conduit interne 16. Ce premier flux d'air FR est alors véhiculé jusqu'à l'entrée 18 du boitier en spirale 3 afin d'être aspiré axialement puis expulsé radialement par le groupe moto-ventilateur 10. Le deuxième flux d'air FA, c'est-à-dire l'air frais, pénètre au sein du boitier 2 par la deuxième entrée d'air 8 directement dans le volume intérieur 5 situé à l'extérieur du premier conduit interne 16. Ce deuxième flux d'air FA est également véhiculé jusqu'à l'entrée 18 du boitier en spirale 3 afin d'être aspiré axialement puis expulsé radialement par le groupe moto-ventilateur 10. En d'autres termes, le deuxième flux d'air FA s'écoule au sein du boitier d'entrée d'air 2 depuis la deuxième entrée d'air 8 jusqu'à l'entrée 18 du boitier en spirale 3 entre les parois 4 du boitier d'entrée d'air 2 et la surface externe du premier conduit interne 16.

Le matériau poreux du premier conduit interne 16 peut correspondre à tout matériau insonorisant présentant des pores comme par exemple de la mousse en polyuréthane (PU), de la mousse en Polyester à pores ouvertes (PPI), de la mousse en Polyéther ou bien un mélange de ces différentes mousses, par exemple, une mousse PU PPI est bien adaptée pour une telle application.

Selon un mode de réalisation particulier illustré à la [Fig. 2], le dispositif 1 selon l'invention comprend en outre un deuxième conduit interne 20 aussi en matériau poreux qui s'étend depuis la deuxième entrée d'air 8 jusqu'à l'entrée 18 du boitier en spirale 3. Le deuxième conduit interne 20 définit un volume intérieur correspondant à un canal d'air 21 pour l'écoulement d'un flux d'air. Comme illustré sur la [Fig. 2], le deuxième flux d'air FA, c'est-à-dire le flux d'air frais, pénètre au sein du boitier 2 par la deuxième entrée d'air 8 directement au sein du canal d'air 21 définit par le deuxième conduit interne 20. Ce deuxième flux d'air FA est alors véhiculé jusqu'à l'entrée 18 du boitier en spirale 3 afin d'être aspiré axialement puis expulsé radialement par le groupe moto-ventilateur 10. Le premier flux d'air FR, c'est-à-dire l'air de recyclage, tout comme pour le mode de réalisation illustré en [Fig. 1], pénètre au sein du boitier 2 par la première entrée d'air 6 directement au sein du canal d'air 17 définit par le premier conduit interne 16 jusqu'à l'entrée 18 du boitier en spirale 3 afin d'être aspiré axialement puis expulsé radialement par le groupe moto-ventilateur 10.

Le matériau poreux du deuxième conduit interne 20 peut également correspondre à tout matériau insonorisant présentant des pores comme par exemple de la mousse en polyuréthane (PU), de la mousse en Polyester à pores ouvertes (PPI), de la mousse en Polyéther ou bien un mélange de ces différentes mousses, par exemple, une mousse PU PPI est bien adaptée pour une telle application.

Selon les modes de réalisations de la [Fig. 1] et de la [Fig. 2], au niveau de l'entrée 18 du boitier en spirale 3, la section de passage S_{FR} d'air pour le premier flux d'air FR peut être plus grande que la section de passage S_{FA} d'air pour le deuxième flux d'air FA. Etant donné que le flux d'air de recyclage FR est déjà proche de la température de consigne des passagers, il peut s'avérer utile d'avoir une section de passage d'air plus grande pour le flux d'air de recyclage FR afin de réduire les efforts fournit par les échangeurs de chaleur. Par exemple il peut être avantageux que la section de passage S_{FR} occupe entre 50 % et 90 % de la surface de l'entrée 18 du boitier en spirale 3 par exemple si on considère que cette entrée 18 s'inscrit dans un plan.

Selon un mode de réalisation non illustré, la section de passage S_{FR} occupe 100% de la surface de l'entrée 18 du boitier en spirale 3. Dans ce cas, le boitier en spirale 3 peut comprendre une deuxième entrée reliée à la deuxième entrée d'air 8. On peut également envisager un groupe moto-ventilateur 10 avec deux roues à pales 14, le moteur 12 étant agencé entre les deux roues à pales 14 avec une entrée agencée pour alimenter en air chaque roue à pale. Il peut y avoir une entrée pour le flux d'air frais FA et une entrée pour le flux d'air de recyclage FR.

Il peut aussi s'avérer avantageux de remplir au moins partiellement le volume intérieur 5 situé entre les deux conduits internes 16, 20 d'un matériau insonorisant, voire du même matériau poreux que celui constituant les deux conduits internes 16,20.

Bien qu'il soit plus aisé d'utiliser un même matériau poreux pour les deux conduits internes 16,20. Il peut aussi s'avérer avantageux d'utiliser deux conduits internes 16,20 avec matériaux différents. Etant donné que l'objet de l'invention porte sur la réduction de bruit au niveau de la première entrée d'air 6, il est plus bénéfique d'agencer le premier conduit interne 16 avec un matériau plus insonorisant que celui du deuxième conduit interne 20. Par exemple, les deux conduits internes 16,20 peuvent être faits en mousse de polyuréthane avec un degré de porosité différent.

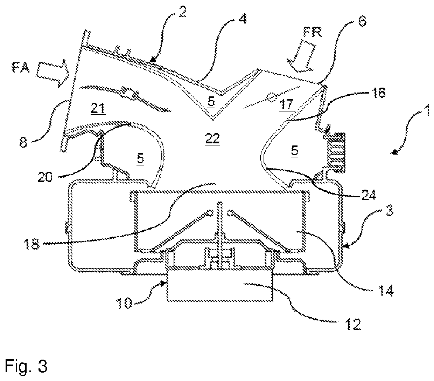

Selon un mode de réalisation particulier illustré à la [Fig. 3], les premier et deuxième conduits internes 16, 20 s'étendent chacun depuis leur entrée d'air 6,8 respective jusqu'à un point de jonction 22 où les deux conduits internes se raccordent, ou s'unissent, de manière à ne former qu'un seul conduit, un troisième conduit interne 24, s'étendant depuis le point de jonction 22 jusqu'à l'entrée 18 du boitier en spirale 3. Dans ce mode de réalisation, les trois conduits internes 16,20 24 sont réalisés en un seul matériau poreux, par exemple de la mousse polyuréthane et d'un seul tenant, autrement dit de manière à ne former qu'une unique pièce monobloc. En d'autres termes, les deux premiers conduits internes 16,20 sont connectés, ou raccordés, fluidiquement en un point de jonction 22. Le troisième conduit interne 24 s'étend depuis ce point de jonction 22 jusqu'à l'entrée 18 du boitier en spirale 3. En d'autres termes, le troisième conduit interne 24 définit un canal d'écoulement pour un mélange de premier flux d'air FR et de deuxième flux d'air FA qui sont véhiculés ensemble depuis le point de jonction 22 jusqu'à l'entrée 18 du boitier en spirale 3.

Il peut aussi s'avérer avantageux de remplir au moins partiellement le volume intérieur 5 situé entre les trois conduits internes 16, 20, 24 d'un matériau insonorisant, voire du même matériau poreux que celui constituant les trois conduits internes 16,20, 24.

Quel que soit les modes de réalisation particuliers, le dispositif 1 selon l'invention peut présenter d'autres caractéristiques décrites ci-dessous.

Par exemple, la section de passage d'air du premier conduit interne 16 et/ou du deuxième conduit interne 20 et/ou du troisième conduit 24 augmente au fur et à mesure en direction de l'entrée 18 du boitier en spirale 3. Autrement dit, la section de passage d'air augmente depuis l'entrée d'air 6,8, ou le point de jonction 22, jusqu'à l'entrée d'air 18 du boitier en spirale 3, ou le point de jonction 22 selon le mode de réalisation. Par exemple, la section de passage d'air peut augmenter en passant d'une section elliptique à une section en cercle, ou circulaire. Un autre exemple, la section de passage d'air peut augmenter en passant d'une section en demi-cercle à une section en cercle, ou circulaire. Un conduit interne 16, 20, 24 avec une section de passage en forme de cercle peut être élargit avec un rayon qui augmente au fur et à mesure que le conduit 16,20,24 est proche de l'entrée 18 du boitier en spirale 3.

Selon un mode de réalisation particulier non illustré, le dispositif de chauffage, ventilation et/ou climatisation peut comprendre un filtre à air. Ce filtre à air peut être agencé en aval du groupe moto-ventilateur 10, ou bien peut être agencé uniquement au niveau de la deuxième entrée d'air 8 afin de filtrer l'air extérieur. Le filtre à air peut aussi être agencé au niveau de l'entrée 18 du boitier en spirale 3 en sortie du premier 16, deuxième 20 et/ou troisième conduit interne 24.

L'invention porte également sur un véhicule automobile comprenant un dispositif 1 de chauffage, ventilation et/ou climatisation tel que décrit ci-dessus.

## Revendications

1. Dispositif (1) de chauffage, ventilation et/ou climatisation pour véhicule automobile comprenant un boitier d'entrée d'air (2) comprenant une pluralité de parois (4) et un boitier en spirale (3) agencé en aval du boitier d'entrée d'air (2) par rapport à l'écoulement d'un flux d'air, ledit boitier d'entrée d'air (2) comprenant en outre:
a. au moins une première entrée d'air (6) pour l'introduction d'un premier flux d'air (FR)
b. au moins une deuxième entrée d'air (8) pour l'introduction d'un deuxième flux d'air (FA)
**caractérisé en ce que**,
c. ledit boitier d'entrée d'air (2) comprend un premier conduit interne (16) en matériau poreux agencé de manière à relier la première entrée d'air (6) à l'entrée (18) du boitier en spirale (3).

2. Dispositif (1) selon la revendication 1, dans lequel le deuxième flux d'air (FA) s'écoule depuis la deuxième entrée d'air (8) jusqu'à l'entrée (18) du boitier en spirale (3) entre les parois (4) du boitier d'entrée d'air (2) et la surface externe du premier conduit interne (16).

3. Dispositif (1) selon la revendication 1 ou 2, dans lequel un deuxième conduit interne (20) en matériau poreux s'étend depuis la deuxième entrée d'air (8) jusqu'à l'entrée (18) du boitier en spirale (3).

4. Dispositif (1) selon la revendication 3 dépendante de la revendication 1, dans lequel les premier et deuxième conduits internes (16,20) s'étendent chacun depuis leur entrée d'air respective (6,8) jusqu'à un point de jonction (22) où les deux conduits internes (16,20) sont raccordés de manière à ne former qu'un seul conduit (24) s'étendant depuis le point de jonction (22) jusqu'à l'entrée (18) du boitier en spirale (3).

5. Dispositif (1) selon l'une des revendications précédentes, dans lequel le matériau poreux correspond à une mousse en polyuréthane.

6. Dispositif (1) selon la revendication 5 dépendante de la revendication 3 ou 4, dans lequel le premier conduit interne (16) présente un degré de porosité différent au deuxième conduit interne (20).

7. Dispositif (1) selon l'une des revendications précédentes, dans lequel la section de passage d'air du premier conduit interne (16) et/ou deuxième conduit interne (20) augmente au fur et à mesure en direction de l'entrée (18) du boitier en spirale (3).

8. Dispositif (1) selon l'une des revendications précédentes, dans lequel la section de passage d'air du premier conduit interne (6) et/ou deuxième conduit interne (20) évolue d'une forme elliptique à une forme en cercle au fur et à mesure en direction de l'entrée (18) du boitier en spirale (3).

9. Dispositif (1) selon la revendication 4 ou 5, dans lequel ledit dispositif comprend en outre un boitier de distribution agencé en aval du conduit en spirale (3), par rapport à l'écoulement d'un flux d'air, le dit boitier de distribution comprenant au moins un échangeur de chaleur et au moins une sortie d'air pour distribuer le flux d'air en direction d'un habitacle de véhicule automobile.

10. Véhicule automobile, **caractérisé en ce qu'**il comprend un dispositif (1) de chauffage, ventilation et/ou climatisation selon l'une des revendications précédentes.

## Patentansprüche

1. Vorrichtung (1) zur Heizung, Lüftung und/oder Klimatisierung eines Kraftfahrzeugs, umfassend ein Lufteinlassgehäuse (2), das mehrere Wände (4) umfasst, und ein spiralförmiges Gehäuse (3), das in Bezug auf die Strömung eines Luftstroms stromabwärts des Lufteinlassgehäuses (2) angeordnet ist, wobei das Lufteinlassgehäuse (2) ferner Folgendes umfasst:
a. mindestens einen ersten Lufteinlass (6) zur Einführung eines ersten Luftstroms (FR),
b. mindestens einen zweiten Lufteinlass (8) zur Einführung eines zweiten Luftstroms (FA), **dadurch gekennzeichnet, dass**
c. das Lufteinlassgehäuse (2) eine erste innere Leitung (16) aus porösem Material umfasst, die so angeordnet ist, dass sie den ersten Lufteinlass (6) mit dem Einlass (18) des spiralförmigen Gehäuses (3) verbindet.

2. Vorrichtung (1) nach Anspruch 1, wobei der zweite Luftstrom (FA) zwischen den Wänden (4) des Lufteinlassgehäuses (2) und der Außenfläche der ersten inneren Leitung (16) vom zweiten Lufteinlass (8) zum Einlass (18) des spiralförmigen Gehäuses (3) strömt.

3. Vorrichtung (1) nach Anspruch 1 oder 2, wobei sich eine zweite innere Leitung (20) aus porösem Material vom zweiten Lufteinlass (8) zum Einlass (18) des spiralförmigen Gehäuses (3) erstreckt.

4. Vorrichtung (1) nach Anspruch 3 in Abhängigkeit von Anspruch 1, wobei sich die erste und die zweite innere Leitung (16, 20) jeweils von ihrem jeweiligen Lufteinlass (6, 8) zu einem Verbindungspunkt (22) erstrecken, wo die beiden inneren Leitungen (16, 20) so verbunden sind, dass sie eine einzige Leitung (24) bilden, die sich vom Verbindungspunkt (22) zum Einlass (18) des spiralförmigen Gehäuses (3) erstreckt.

5. Vorrichtung (1) nach einem der vorangehenden Ansprüche, wobei das poröse Material einem Polyurethanschaum entspricht.

6. Vorrichtung (1) nach Anspruch 5 in Abhängigkeit von Anspruch 3 oder 4, wobei die erste innere Leitung (16) einen anderen Porositätsgrad als die zweite innere Leitung (20) aufweist.

7. Vorrichtung (1) nach einem der vorangehenden Ansprüche, wobei der Luftdurchlassquerschnitt der ersten inneren Leitung (16) und/oder der zweiten inneren Leitung (20) in Richtung des Einlasses (18) des spiralförmigen Gehäuses (3) allmählich zunimmt.

8. Vorrichtung (1) nach einem der vorangehenden Ansprüche, wobei sich der Luftdurchlassquerschnitt der ersten inneren Leitung (6) und/oder der zweiten inneren Leitung (20) in Richtung des Einlasses (18) des spiralförmigen Gehäuses (3) allmählich von einer elliptischen Form zu einer kreisförmigen Form entwickelt.

9. Vorrichtung (1) nach Anspruch 4 oder 5, wobei die Vorrichtung ferner ein Verteilungsgehäuse umfasst, das in Bezug auf die Strömung eines Luftstroms stromabwärts der spiralförmigen Leitung (3) angeordnet ist, wobei das Verteilungsgehäuse mindestens einen Wärmetauscher und mindestens einen Luftauslass zur Verteilung des Luftstroms in Richtung eines Fahrgastraums des Kraftfahrzeugs umfasst.

10. Kraftfahrzeug, **dadurch gekennzeichnet, dass** es eine Vorrichtung (1) zur Heizung, Lüftung und/oder Klimatisierung nach einem der vorangehenden Ansprüche umfasst.

## Claims

1. Heating, ventilation and/or air-conditioning device (1) for a motor vehicle, comprising an air inlet housing (2) comprising a plurality of walls (4) and a spiral housing (3) arranged downstream of the air inlet housing (2) with respect to the flow of an air stream, said air inlet housing (2) further comprising:
a. at least one first air inlet (6) for introducing a first air stream (FR),
b. at least one second air inlet (8) for introducing a second air stream (FA),
**characterized in that**,
c. said air inlet housing (2) comprises a first internal duct (16) made of porous material that is arranged so as to connect the first air inlet (6) to the inlet (18) of the spiral housing (3).

2. Device (1) according to Claim 1, wherein the second air stream (FA) flows from the second air inlet (8) as far as the inlet (18) of the spiral housing (3) between the walls (4) of the air inlet housing (2) and the external surface of the first internal duct (16).

3. Device (1) according to Claim 1 or 2, wherein a second internal duct (20) made of porous material extends from the second air inlet (8) as far as the inlet (18) of the spiral housing (3).

4. Device (1) according to Claim 3 dependent on Claim 1, wherein the first and second internal ducts (16, 20) each extend from their respective air inlet (6, 8) as far as a junction point (22) where the two internal ducts (16, 20) are connected so as to form only a single duct (24) extending from the junction point (22) as far as the inlet (18) of the spiral housing (3).

5. Device (1) according to one of the preceding claims, wherein the porous material corresponds to a polyurethane foam.

6. Device (1) according to Claim 5 dependent on Claim 3 or 4, wherein the first internal duct (16) has a degree of porosity that is different from that of the second internal duct (20).

7. Device (1) according to one of the preceding claims, wherein the air passage section of the first internal duct (16) and/or second internal duct (20) increases progressively in the direction of the inlet (18) of the spiral housing (3).

8. Device (1) according to one of the preceding claims, wherein the air passage section of the first internal duct (6) and/or second internal duct (20) changes progressively from an elliptical shape to a circle shape in the direction of the inlet (18) of the spiral housing (3) .

9. Device (1) according to Claim 4 or 5, wherein said device further comprises a distribution housing arranged downstream of the spiral duct (3), with respect to the flow of an air stream, said distribution housing comprising at least one heat exchanger and at least one air outlet for distributing the air stream in the direction of a motor vehicle passenger compartment.

10. Motor vehicle, **characterized in that** it comprises a heating, ventilation and/or air-conditioning device (1) according to one of the preceding claims.
